# EUROPEAN PATENT APPLICATION

(11) **EP 3 196 163 A1**
(43) Date of publication of application: **26.07.2017**
(21) Application number: 17151707.1
(22) Date of filing: 17.01.2017
(51) Int. Cl.: C01B 3/08, C01B 3/50

(54) **SYSTEM FOR THE GENERATION OF HYDROGEN FROM WATER**

(30) Priority: 19.01.2016 TW 105101525
(71) Applicant: Yang, Chung-Liang, Taipei city 106 (TW); Chen, Wen-Hui, New Taipei City 234 (TW)
(72) Inventor: Yang, Chung-Liang, 106 Taipei City (TW)
(74) Representative: DTS Patent- und Rechtsanwälte Schnekenbühl und Partner mbB

(57) **Abstract**

A system for generating hydrogen comprising: reactors for containing an aqueous hydrogen gas, water, and a reaction body which contains a metal catalyst reactant, wherein the water and the metal catalyst reactant react to produce the aqueous hydrogen gas and a reacting solution which contains a metal catalyst oxide, with each said reactor provided with a vent valve for discharging the aqueous hydrogen gas, a water admitting valve for controlling a water feed, and a water draining valve for discharging the reacting solution; a gas collecting chamber connected to the vent valve of each said reactor to collect the aqueous hydrogen gas discharged from the reactor; and
a water replenishing chamber connected to the water admitting valves of the reactors to replenish the water required for a reaction which occurs in the reactors. The system further includes a gas filtering chamber, a buffer chamber, a temporary storage chamber, settling tanks, a screw cleaner, and hardware therebetween, such as communication pipes and valves, to provide an environment-friendly hydrogen-mixed gas. The hydrogen-mixed gas is flammable, and has hydrogen content of 30% or above. The reactors are connected by openable/closable connection valves through gas-delivering pipes such that the metal catalyst reactant in each reactor reacts with water independently, allowing the system to operate around the clock and every day and thereby be conducive to mass production.

## Description

### FIELD OF THE INVENTION

The present invention relates to a hydrogen-oxygen separation energy-generating system which comprises structural components required for reactants to generate high-heating-value, low-cost, and environment-friendly clean energy.

### BACKGROUND OF THE INVENTION

When combusted, hydrogen releases a large amount of heat and is reduced to clean water, without producing any hazardous substances, such as sulfur oxide (SOx), particulates, and carbon contents (for example, CO or CO₂). Thanks to its intrinsic properties, such as a high heating value and being very clean, hydrogen is used widely in industrial heating, home heating, power generation, consumer services, industries, transportation, and rescue operations. Furthermore, due to its characteristics, for example, conducive to zero carbon emission, environment-friendly, low-cost, and safe, production of hydrogen is expected to be scaled up and to be commercialized, so as to not only be supplied to the energy markets and power markets, achieve energy saving and carbon emission reduction, but also exercise pollution control, promote economic development, and protect ecological balance, thereby addressing important issues pertaining to energy shortage, environmental pollution, and climate changes.

Accordingly, it is imperative to provide a hydrogen-oxygen separation energy-generating system which is robust, compact, compatible-with-raw-material, safe to operate, and cost-efficient, so as to generate high-heating-value, low-cost, and environment-friendly clean energy quickly and by mass production.

### SUMMARY OF THE INVENTION

The present invention provides a hydrogen-oxygen separation energy-generating system, comprising: reactors for containing an aqueous hydrogen gas, water, and a reaction body which contains a metal catalyst reactant, wherein the water and the metal catalyst reactant react to produce the aqueous hydrogen gas and a reacting solution which contains a metal catalyst oxide, with each said reactor provided with a vent valve for discharging the aqueous hydrogen gas, a water admitting valve for controlling a water feed, and a water draining valve for discharging the reacting solution; a water replenishing chamber connected to the water admitting valves of the reactors to replenish the water required for a reaction which occurs in the reactors; and a gas collecting chamber connected to the vent valve of each said reactor to collect the aqueous hydrogen gas discharged from the reactor.

In an embodiment of the present invention, the metal catalyst reactant comprises at least 80 wt% of aluminum.

In an embodiment of the present invention, the metal catalyst reactant further comprises lithium, sodium, magnesium, gallium, and/or molybdenum.

In an embodiment of the present invention, the system further comprises at least one settling tank connected to the water draining valve of the reactors to collect the reacting solution.

In an embodiment of the present invention, a screw cleaner is disposed at the bottom of the at least one settling tank to remove the metal catalyst oxide which has settled at the bottom of the at least one settling tank.

In an embodiment of the present invention, the upper portion of the at least one settling tank is connected to the water replenishing chamber to return a supernatant on the reacting solution to the water replenishing chamber.

In an embodiment of the present invention, the system further comprises a gas filtering chamber connected to the gas collecting chamber to allow the aqueous hydrogen gas therein to pass through the gas filtering chamber, so as to remove excess water vapor and fog from the aqueous hydrogen gas and cool the aqueous hydrogen gas, thereby producing the intended hydrogen-mixed gas.

In an embodiment of the present invention, the system further comprises a temporary storage chamber connected to the gas filtering chamber to store the hydrogen-mixed gas thus filtered.

In an embodiment of the present invention, the system further comprises a buffer chamber disposed between the gas filtering chamber and the temporary storage chamber to store the hydrogen-mixed gas thus filtered, release pressure, and discharge air from the temporary storage chamber.

The present invention provides a hydrogen-oxygen separation energy-generating system which is robust, compact, compatible-with-raw-material, safe to operate, and cost-efficient, so as to generate high-heating-value, low-cost, and environment-friendly clean energy with a hydrogen-mixed gas. A vent valve, a water admitting valve and a water draining valve are disposed at the top and the bottom of each reactor. The valves can be turned off at any time to isolate the gas channel and water channel of each reactor so that the reaction body (inclusive of the metal catalyst reactant therein) in any one of reactors can be changed at any time, without affecting the other reactors or suspending the operation of the hydrogen-oxygen separation energy-generating system.

### BRIEF DESCRIPTION OF THE DRAWINGS

FIG. 1 is a schematic view of a hydrogen-oxygen separation energy-generating system of the present invention;
FIG. 2A is a plan view of the reactors and gas collecting chamber of the present invention;
FIG. 2B is a cross-sectional view of the reactor and gas collecting chamber of the present invention;
FIG. 3 is a schematic view of a gas filtering chamber of the present invention; and
FIG. 4 is a schematic view of settling tanks of the present invention.

### DETAILED DESCRIPTION OF THE PREFERRED EMBODIMENTS

The embodiment of the present invention is further described below to enable persons skilled in the art to understand and implement the present invention.

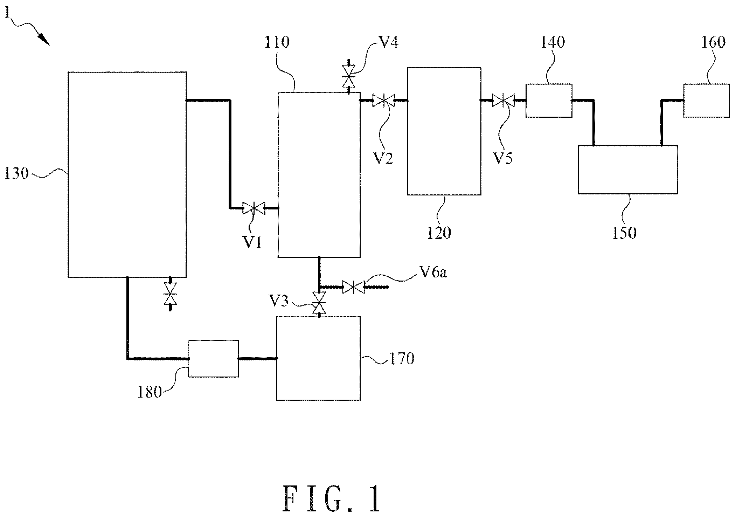

Referring to FIG. 1, there is shown a schematic view of a hydrogen-oxygen separation energy-generating system 1 according to a preferred embodiment of the present invention. The hydrogen-oxygen separation energy-generating system 1 comprises reactors 110, a gas collecting chamber 120, and a water replenishing chamber 130. The hydrogen-oxygen separation energy-generating system 1 further comprises a gas filtering chamber 140, a buffer chamber 150, a temporary storage chamber 160, settling tanks 170, and hardware therebetween, such as communication pipes and valves, to provide an environment-friendly, flammable hydrogen-mixed gas. The aforesaid valves are not limited to the valves described below but can also be provided in the form of a vent valve and a control valve as needed.

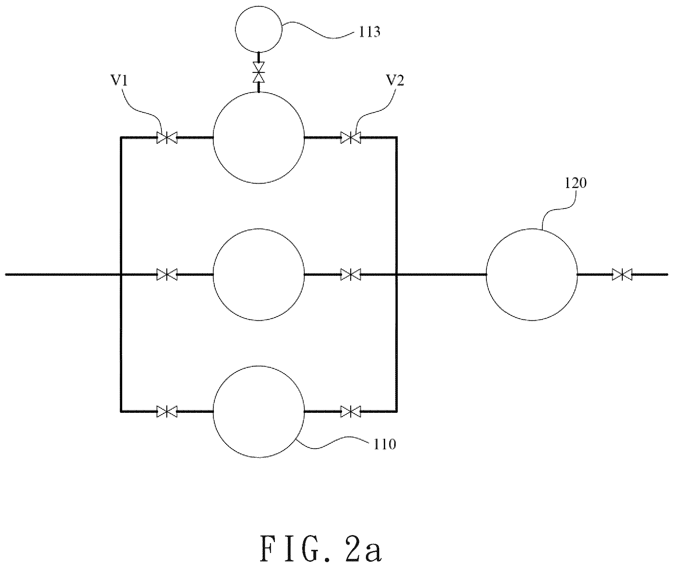

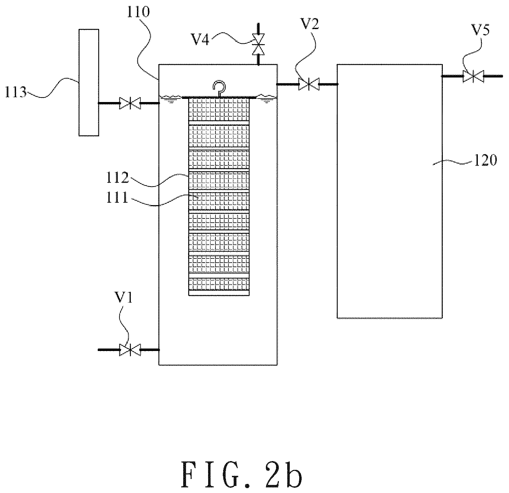

Referring to FIG. 2A and FIG. 2B, reactors 110, in the number of three for illustrative rather than restrictive purposes, are provided according to the dimensions and size of the hydrogen-oxygen separation energy-generating system 1 or the demand for the yield of the hydrogen-mixed gas. The reactors 110 each contain an aqueous hydrogen gas, water, and a reaction body 112 which contains a metal catalyst reactant 111, and each are provided with a water admitting valve V1, a vent valve V2, a water draining valve V3, a safety valve V4, and a water level monitoring device 113 (not shown in FIG. 2B). The water level monitoring device 113 and the water admitting valve V1 together control the water feed of the water replenishing chamber 130 such that the metal catalyst reactant 111 in the reaction body 112 and the reactors 110 induce a hydrogen-oxygen separation reaction of the water. The hydrogen-oxygen separation reaction is accompanied by a reaction which occurs between the metal catalyst reactant 111 and oxygen atoms released from the water to produce an ultrafine by-product, that is, a metal catalyst oxide, which is suspended in the water to become a reacting solution. The gas produced by the reaction is an aqueous hydrogen gas. The gas collecting chamber 120 is connected to the vent valve V2 such that the aqueous hydrogen gas produced at the upper level of each reactor 110 is collected by the gas collecting chamber 120 and then collectively discharged from an exhaust valve V5 of the gas collecting chamber 120. Furthermore, the water admitting valve 111 of each reactor 110 can be turned off at any time to stop the water feed to each reactor 110. The aforesaid design enables each reactor 110 to turn off the vent valve V2 at the upper level and the water admitting valve V1 at any time to independently replace the reaction body 112 therein and change the centrally-located metal catalyst reactant 111, allowing the hydrogen-oxygen separation energy-generating system 1 to operate around the clock and every day.

A sewage valve V6a is disposed at the bottom of each reactor 110. If the hydrogen-oxygen separation reaction between the metal catalyst reactant 111 and the water is overly vigorous, or when a worker wants to regulate or stop the hydrogen-oxygen separation reaction at any time or urgently, the worker may turn on the sewage valve V6a safely and quickly to discharge and deliver the water from the reactors 110 to a safe place or a container quickly, so as to slow down or stop the hydrogen-oxygen separation reaction immediately.

Referring to FIG. 1, according to the present invention, the water replenishing chamber 130 is connected to the water admitting valve V1 of the reactor 110. Conventional tap water is fed to the reactor 110 through the water admitting valve V1 which also controls the water level of the reactor 110. Optionally, the water replenishing chamber 130 may come with a heater for heating the water therein or preventing the water from freezing, as needed. Optionally, a sewage valve may be disposed at the bottom of the water replenishing chamber 130 to remove dirt and impurities from the water or effectuate quick drainage of the water, as needed.

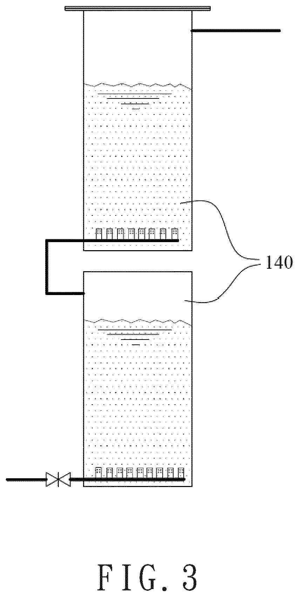

Referring to FIG. 3, according to the present invention, the gas filtering chamber 140 is connected to the exhaust valve V5 of the gas collecting chamber 120. Since the aqueous hydrogen gas produced by each reactor 110 contains a large amount of hot water vapor and fog, the aqueous hydrogen gas is collected by pipes and delivered to the gas collecting chamber 120 before being introduced into the gas filtering chamber 140 which is bilayered. Due to the bilayered structure of the gas filtering chamber 140 and the liquid water therein, the aqueous hydrogen gas in the gas filtering chamber 140 is not only filtered to remove excess water vapor and fog therefrom, but is also cooled, thereby forming a hydrogen-mixed gas.

Referring to FIG. 1, according to the present invention, the buffer chamber 150 is connected to the gas filtering chamber 140. The hydrogen-mixed gas leaves the gas filtering chamber 140 for the buffer chamber 150. The buffer chamber 150 releases pressure of, and discharges air from, the hydrogen-oxygen separation energy-generating system 1, as soon as the hydrogen-oxygen separation energy-generating system 1 starts to operate. Afterward, the hydrogen-mixed gas is introduced into the temporary storage chamber 160 such that the hydrogen-mixed gas is output steadily to not only preclude the reflow thereof, but also protect both the gas filtering chamber 140 and the gas collecting chamber 120.

Referring to FIG. 1, according to the present invention, the temporary storage chamber 160 is connected to the buffer chamber 150 such that the aqueous hydrogen gas passes through the gas collecting chamber 120, gas filtering chamber 140, and buffer chamber 150 to form the hydrogen-mixed gas. Then, the hydrogen-mixed gas is delivered to the temporary storage chamber 160 such that the hydrogen-mixed gas becomes available for later use after attaining a constant volume and a constant pressure.

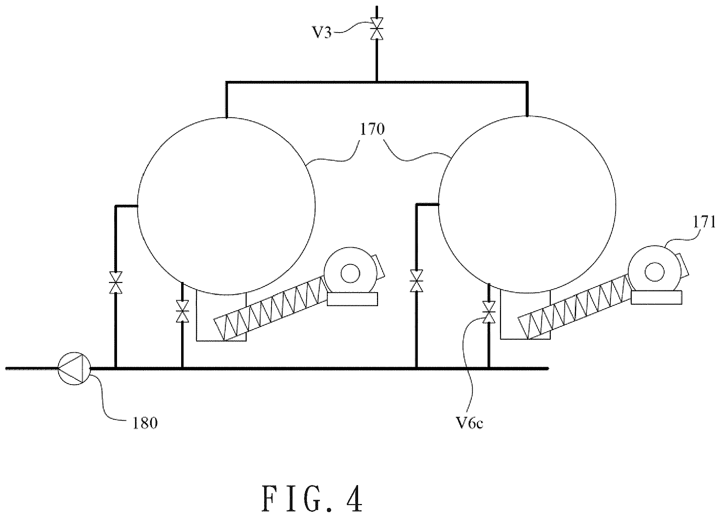

Referring to FIG. 4, according to the present invention, at least one settling tank 170 is provided as needed and connected to the water draining valve V3 of the reactor 110. The vigorous hydrogen-oxygen separation reaction which occurs to the water and is triggered by the metal catalyst reactant 111 in the reaction body 112 and the reactors 110 is accompanied by a reaction which occurs between the metal catalyst reactant in the reactors 110 and the released oxygen atoms from water and produces an ultrafine by-product, that is, a metal catalyst oxide, which is suspended in the water to become a reacting solution. The reacting solution is delivered to the settling tanks 170 according to its concentration or by turning on the water draining valve V3 regularly such that the fine metal catalyst oxide in the reacting solution can gradually settle. A screw cleaner 171 is disposed beneath each settling tank 170 to recycle the metal catalyst oxide. A sewage valve V6b which is disposed at each settling tank 170 is turned on as needed to make the pressure inside the settling tank 170 equal the pressure outside the settling tank 170.

Referring to FIG. 1 and FIG. 4, the settling tanks 170 are connected to the water replenishing chamber 130 through a liquid pipe, whereas a circulating pump 180 is disposed at the liquid pipe such that a supernatant at the upper level of each settling tank 170 is returned to the water replenishing chamber 130 through the circulating pump 180. In doing so, the water in the hydrogen-oxygen separation energy-generating system 1 is recycled and reused continually, thereby dispensing with the need to suspend the hydrogen-oxygen separation energy-generating system 1. The aforesaid process is fully automated.

According to the present invention, the metal catalyst reactant 111 in the reaction body 112 is produced from different metal catalysts. The major constituent of the metal catalyst reactant 111 is aluminum which accounts for up to 80wt% of the metal catalyst reactant 111. The metal catalyst reactant 111 further comprises lithium, sodium, magnesium, gallium, and/or molybdenum. The metal catalyst reactant 111 thus produced can be provided in the form of tiny balls or any shapes of a size depending on the required yield of the hydrogen-mixed gas. The duration of the aqueous hydrogen gas-producing reaction and thus the yield of the hydrogen-mixed gas increase with the particle diameter of the metal catalyst reactant 111.

The production of the metal catalyst reactant 111 entails removing a protective oxide film from the surface of the metal catalyst reactant by mechanical polishing or removing a protective oxide film from the surface of the metal catalyst reactant by immersing the metal catalyst reactant in an aqueous solution of an alkaline substance (such as an alkali metal, alkaline earth metal, transition metal, ammonium hydroxide, oxide, hydride, and organic compound), then rinsing the metal catalyst reactant with clean water, and finally draining it for later use. Before the reaction begins, it is necessary to introduce the drained metal catalyst reactant into the reaction body 112 uniformly, and then put the reaction body 112 in the reactors 110 which holds the water such that the hydrogen-oxygen separation reaction between the water and the metal catalyst reactant begins.

In the reactors 110, the main reaction process and principle of the phenomenon of water-based hydrogen-oxygen separation triggered as a result of the contact between the water and the metal catalyst reactant 111 filled in the reaction body 112 are as follows: the reaction takes place in each reactor 110 independently to enable various atoms and molecules to rebound from, impact on, and collide with each other and undergo resonant motions together within the closed cavity of each reactor 110 at high temperature and high pressure, thereby transforming them into the aqueous hydrogen gas which contains plenty water vapor and fog. The primary chemical equation is presented below.

X_{(S)} + H₂O_{(I)} → H_{2(g)} + XO_{(aq.)}

X_{(S)}: metal catalyst reactant, solid.
H₂O_{(I)}: water, i.e., conventional clean water, such as clean tap water.
H_{2(g)}: main product is hydrogen. Since the vigorous reaction occurs in the water, the hydrogen thus produced mixes with plenty water vapor and fog and therefore is known as an aqueous hydrogen gas. Then, the aqueous hydrogen gas is introduced into the gas filtering chamber to filter out the water vapor and fog, thereby producing the hydrogen-mixed gas intended by the hydrogen-oxygen separation energy-generating system 1.
XO_{(aq)}: metal catalyst oxide, one of the by-products of the reaction, comes in the form of particles suspended in an aqueous solution.
Afterward, the aqueous hydrogen gas is collected and filtered to remove water vapor and fog therefrom, thereby producing the intended hydrogen-mixed gas.

When operating at high temperature and high pressure, the closed cavity is conducive to a high probability of collision between the hydrogen atoms, hydrogen molecules, and water molecules which rebound from, impact on, and collide with each other and undergo resonant motions together within the closed cavity, and in consequence transformation and recombination occurs between a few ones of the atoms and molecules to therefore produce an aqueous hydrogen gas which contains plenty water vapor and fog. The temperature and pressure of the hydrogen-oxygen separation energy-generating system 1 increases gradually during the exothermic reaction, and therefore the hydrogen-oxygen separation reaction is becoming faster and more vigorous and lasts longer. At this point in time, no external electrical energy or thermal energy is required to increase spontaneously the temperature of the water in the reactors 110 and increase gradually the pressure of the hydrogen-oxygen separation reaction system 1. Upon its contact with a heat source of 100°C or higher in a high-pressure environment, the water contained in the reaction body 112 quickly releases hydrogen atoms and oxygen atoms which collide with each other vigorously and speedily to therefore bring about more turbine resonance transformation. Therefore, the hydrogen-oxygen separation reaction is a chain reaction.

According to the prior art, carrying out the reaction for 10 minutes increases the core temperature of the reaction body 112 to 400°C and the water temperature of the reactors 110 to at least 100°C, whereas carrying out the reaction for 20 minutes increases the core temperature of the reaction body 112 to 800∼1,000°C and a local water temperature of the reactors 110 to at least 100∼135°C. Some released hydrogen atoms in the reaction body 112 and the reactors 110 are transformed into the aqueous hydrogen gas of the present invention and gradually accumulated at the upper level of the reactors 110 and in the gas collecting chamber 120. After being collected by the gas collecting chamber 120, the aqueous hydrogen gas is introduced into the gas filtering chamber 140 so as to be filtered therein and have water vapor and fog removed therefrom, thereby being turned into a hydrogen-mixed gas which is then introduced into the buffer chamber 150 and the temporary storage chamber 160 for later use.

The speed of the reaction can be controlled to, for example, immediately slow down or stop the hydrogen-oxygen separation reaction, by lowering the water level of each reactor 110 or quickly draining the water.

Each kilogram of metal catalyst reactant 111 which contains at least 80wt% of aluminum yields around 10m³ of aqueous hydrogen gas. The aqueous hydrogen gas is introduced into the gas collecting chamber 120 and the gas filtering chamber 140 to filter out water vapor and fog before being turned into a hydrogen-mixed gas. The hydrogen-mixed gas has a hydrogen content of 30% or higher and thus is flammable, and it has a heating value up to 11,000 kcal/m³ as well as a combustion temperature of 1,000-1,300°C. Since the hydrogen-mixed gas does not contain sulfur, carbon, or any other impurities, it is only reduced into clean water (H₂O) after being combusted (oxidized) to release a large amount of heat, but does not produce any pollutants or harmful substances, such as sulfur oxide (SOx), fuel nitrogen oxide (fuel-NOx), carbon oxide (CO, CO2), and particulates (PM10, PM2.5).

The steps, process flow, and products of the present invention render the humankind less dependent on conventional fossil energy, reduce the damage and pollution caused to the environment by the use of conventional fossil energy, thereby addressing important issues pertaining to energy shortage, environmental pollution, and climate changes positively.

The accompanying drawings and the above description are illustrative of preferred embodiments of the present invention rather than restrictive of the implementation of the present invention. All changes or modifications made by persons skilled in the art to the preferred embodiments according to the spirit embodied in the present invention should fall within the scope of the present invention.

## Claims

1. A hydrogen-oxygen separation energy-generating system, comprising:
reactors for containing an aqueous hydrogen gas, water, and a reaction body which contains a metal catalyst reactant, wherein the water and the metal catalyst reactant react to produce the aqueous hydrogen gas and a reacting solution which contains a metal catalyst oxide, with each said reactor provided with a vent valve for discharging the aqueous hydrogen gas, a water admitting valve for controlling a water feed, and a water draining valve for discharging the reacting solution;
a gas collecting chamber connected to the vent valve of each said reactor to collect the aqueous hydrogen gas discharged from the reactor; and
a water replenishing chamber connected to the water admitting valves of the reactors to replenish the water required for a reaction which occurs in the reactors.

2. The hydrogen-oxygen separation energy-generating system of claim 1, wherein the metal catalyst reactant comprises at least 80 wt% of aluminum.

3. The hydrogen-oxygen separation energy-generating system of claim 2, wherein the metal catalyst reactant further comprises at least one of lithium, sodium, magnesium, gallium, and molybdenum.

4. The hydrogen-oxygen separation energy-generating system of claim 1, further comprising a gas filtering chamber connected to the gas collecting chamber to allow the aqueous hydrogen gas therein to pass through the gas filtering chamber, thereby removing excess water vapor and fog from the aqueous hydrogen gas and cooling the aqueous hydrogen gas.

5. The hydrogen-oxygen separation energy-generating system of claim 4, further comprising a temporary storage chamber connected to the gas filtering chamber to store the hydrogen-mixed gas thus filtered.

6. The hydrogen-oxygen separation energy-generating system of claim 5, further comprising a buffer chamber disposed between the gas filtering chamber and the temporary storage chamber to store the hydrogen-mixed gas thus filtered, release pressure from said system, and discharge air from the temporary storage chamber.

7. The hydrogen-oxygen separation energy-generating system of claim 1, further comprising at least one settling tank connected to the water draining valve of the reactors to collect the reacting solution.

8. The hydrogen-oxygen separation energy-generating system of claim 7, wherein a screw cleaner is disposed at a bottom of the at least one settling tank to remove the metal catalyst oxide which has settled at a bottom of the at least one settling tank.

9. The hydrogen-oxygen separation energy-generating system of claim 7, wherein an upper portion of the at least one settling tank is connected to the water replenishing chamber to return a supernatant on the reacting solution to the water replenishing chamber.
